# EUROPEAN PATENT APPLICATION

(11) **EP 1 970 639 A2**
(43) Date of publication of application: **17.09.2008**
(21) Application number: 08150855.8
(22) Date of filing: 30.01.2008
(51) Int. Cl.: F24F 5/00, F24F 12/00

(54) **Ventilation system for houses, buildings etc.**

(30) Priority: 30.01.2007 EP 07101434
(71) Applicant: Nederlandse Organisatie voor toegepast- natuurwetenschappelijk onderzoek TNO, 2628 VK Delft (NL)
(72) Inventor: Jacobs, Peter, 2614 LB Delft (NL); Knoll, Bastiaan, 2671 DR Naaldwijk (NL)
(74) Representative: Hatzmann, Martin

(57) **Abstract**

Ventilation system for houses, buildings etc. comprising air evacuation means (1,2) and decentral or central air supply means (3) such as façade grids etc. for forced or non-forced air supply. A transport circuit (4) with a pumpable medium such as a liquid, is arranged for transferring thermal energy by circulation of the medium. First temperature exchange means (6) are arranged to exchange thermal energy from one or more sources of residual or ambient heat, such as from the air in the air evacuation means (2), solar energy, or from wastewater, and the medium in the transport circuit. Second temperature exchange means (7) are arranged to exchange thermal energy between the air in the air supply means (3) and the medium in the transport circuit. The transport circuit (4) and the first and second temperature exchange means (6,7) are arranged such that the thermal energy of the sources of residual or ambient heat and the thermal energy of the air in the air supply means are mutually exchanged via the transport circuit.

## Description

### Field of the invention

The invention concerns a ventilation system for houses, buildings etc. comprising decentral or central air supply means such as façade grids etc. for forced or non-forced air supply.

### Background of the invention

A large part of the dwellings in the Netherlands are equipped with a ventilation system with a forced (mechanical) central air exhaust and non-forced decentral air supply via façade grids etc.

As presently arranged the system has the following disadvantages:
- it is impossible to recover useful heat without using a heat pump;
- pre-heating of the supply air, as in the case of balanced ventilation with heat recuperation, is not possible, because the supply grids are not centrally located;
- the installation of a balanced ventilation system in existing dwellings is problematic because of the dimensions of the supply ducts;
- the energy consumption of existing dwellings for the purpose of ventilation when outdoor temperatures are low is relatively high, and discomfort often occurs due to drafts from the air supply grids.

It should be remarked that when "heat" recuperation is discussed, this may also be thought of "cold" recuperation (e.g., during hot seasons).

### Summary of the invention

The invention aims at counteracting the problems mentioned above by providing a ventilation system of the type discussed above, preferably by providing:
- a transportation circuit with a pumpable medium such as a liquid, arranged for transferring thermal energy by means of circulation of the medium;
- first temperature exchange means arranged to exchange thermal energy from one or more sources of residual or ambient heat - e.g. the air in the (central or non-central) air exhaust means, solar heat, heat in drain water or wastewater etc. - and the medium in the transportation circuit;
- second temperature exchange means arranged to exchange thermal energy between the air in the air supply means and the medium in the transportation circuit;
- the transport circuit and the first and second temperature exchange means being arranged such that the thermal energy of the sources of residual or ambient heat - whether previously stored or not - and the thermal energy of the air in the air supply means are exchanged via the transport circuit.

The invention therefore aims at providing a system for harvesting or recuperating and (re)utilizing a great part of the residual or ambient heat (or cold) in dwellings and other buildings at low temperatures or at small temperature differences. The (residual or ambient) heat is extracted in particular from the ventilation exhaust air or possibly (also) from sources such as a solar panel, warm wastewater, flue gases, structural parts, the soil or temporary storage buffers. The high yield of heat recuperation has two causes. First the heat is transferred to the supply air. This is favorable because of the relatively low supply temperature. Second, a negative pressure prevails in buildings with a "C" ventilation system, i.e. a system having mechanical exhaust and natural supply, because of the forced evacuation of the air and the unforced ("natural") air supply (intake). This reduces the pressure difference across most leaks and therefore the total leakage flow so that the potential for heat recuperation from the ventilation exhaust air is maximal.

### Exemplary embodiment

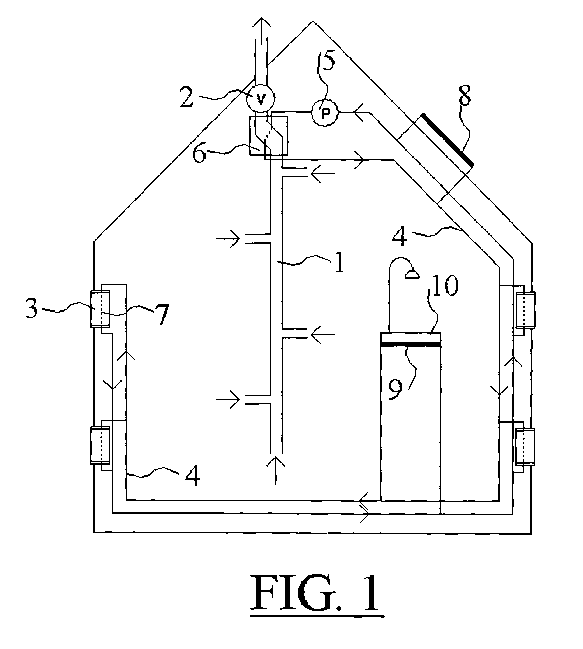

Figure 1 shows an exemplary embodiment of the system according to the invention.

Figure 1 shows a building (e.g. a house) in which a ventilation system has been installed. The ventilation system includes air evacuation means in the form of a system of air ducts 1 via which air is drawn out of the various rooms of the building by a central fan 2. Fresh air can be admitted to the building via a non-central, non-forced, i.e. not provided with a fan or the like, air supply means in the form of supply openings 3.

The installation also includes a liquid circuit 4 arranged for transferring thermal energy by circulation of a liquid. The liquid may be pumped in circulation by a pump 5.

First temperature exchange means are formed by an air/liquid heat exchanger 6 that is arranged to exchange thermal energy from the air in the air exhaust means 1 and the liquid in the liquid circuit 4. In the cold season the relatively warm exhaust air originating from the (heated) building will warm up the liquid in the liquid circuit 4. During the warm season the relatively cold exhaust air originating from the (cooled) building will cool the liquid in the liquid circuit 4.

Second temperature exchange means are formed by a number of air/liquid heat exchangers 7 that are arranged to exchange thermal energy from the air in the decentral air supply means 3 and the liquid in a liquid circuit 4. In the cold season the relatively warm liquid can thus warm up the air originating from the outside to the inside of the building so that no cold draft is created and there is less need for "stoking" thanks to the heat recuperation. In the warm season the relatively cold liquid can thus cool the air moving from the outside to the inside of the building so that the building requires less cooling.

The liquid circuit 4 and the first and second temperature exchange means 6 and 7 respectively are therefore arranged such that the thermal energy of the air in the air evacuation means 1 and the thermal energy of the air in the decentral air supply means 3 respectively are mutually exchanged with high efficiency, so that the thermal energy - in the form of heat or cold (relative to the outside air) - can be recuperated.

In order not to interfere with the natural ventilation process the pressure drop across the supply opening 3 including heat exchanger 7 on the air side may not be greater than ca. 1 Pa.

Figure 1 also shows that the means for heat extraction from the exhaust air can be supplemented by other sources of residual or ambient heat. Thus, for example, solar collectors 8 may be connected to the liquid circuit 4 and/or heat exchangers 9 that are capable of recuperating from (warm) drainage water or wastewater, e.g. as shown schematically in the figure by a heat exchanger 9 that is connected to a shower tank 10.

## Claims

1. Ventilation system for houses, buildings etc. comprising decentral or central air supply means (3) such as façade grids etc. for forced or non-forced air supply,
**characterized by**
- a transport circuit with a pumpable medium such as a liquid arranged for transferring thermal energy by circulation of the medium;
- first temperature exchange means (6,8,9) arranged to exchange thermal energy from one or more sources of residual or ambient heat and the medium in the transport circuit;
- second temperature exchange means (7) arranged to exchange thermal energy between the air in the air supply means(3) and the medium in the transport circuit;
- where the transport circuit (4) and the first and second temperature exchange means (6,7) are arranged such that the thermal energy from the sources of residual or ambient heat, stored or not-stored temporarily, and the thermal energy from the air in the air supply means are mutually exchanged via the transport circuit.

2. Ventilation system according to claim 1, comprising air evacuation means (1,2) and wherein the first temperature exchange means are arranged to exchange thermal energy in the air of the air evacuation means (1,2) and the medium in the transport circuit (4).

3. Ventilation system according to claim 1, wherein the first temperature exchange means (8) are arranged to exchange thermal energy originating from the external environment of the relevant houses, buildings etc., such as solar energy, and the medium in the transport circuit (4).

4. Ventilation system according to claim 1, wherein the first temperature exchange means (9) are arranged to exchange thermal energy from the inside of the relevant houses, buildings etc., such as present, e.g., in drainage water or wastewater and the medium in the transport circuit (4).
